# EUROPEAN PATENT APPLICATION

(11) **EP 3 130 234 A1**
(43) Date of publication of application: **15.02.2017**
(21) Application number: 15772858.5
(22) Date of filing: 27.03.2015
(51) Int. Cl.: A23L 27/00, A23L 27/20

(54) **SPICE COMPOSITION**

(30) Priority: 29.03.2014 JP 2014070654
(71) Applicant: Ajinomoto Co., Inc., Tokyo 104-8315 (JP)
(72) Inventor: KIMURA, Momoko, Kawasaki-shi Kanagawa 210-8681 (JP); AOKI, Toshiyuki, Kawasaki-shi Kanagawa 210-8681 (JP); SUZUKI, Rie, Kawasaki-shi Kanagawa 210-8681 (JP)
(74) Representative: Strehl Schübel-Hopf & Partner
(86) International application number: PCT/JP2015/059549
(87) International publication number: WO 2015/152023

(57) **Abstract**

An object of the present invention is to provide a flavoring composition capable of conveniently imparting a sense of cooking to a seasoning and a food.

A flavoring composition containing component group A consisting of (A1) 2,6-dimethylpyrazine and (A2) 2-ethyl-3-methylpyrazine, and component group B consisting of at least one compound selected from (B1) allyl sulfide, (B2) allyl disulfide and (B3) allyl methyl disulfide.

## Description

### Technical Field

The present invention relates to a flavoring composition used for imparting a sense of cooking. In addition, the present invention relates to a food and a seasoning containing the flavoring composition, and a production method thereof. Furthermore, the present invention relates to a method of imparting a sense of cooking by utilizing the flavoring composition.

### Background Art

The "impact", "harmony", "mouthfulness" and "lasting" of a sense of cooking constituted of cooking aroma, sense of spice, salty taste and the like are important factors that determine deliciousness of a dish. It is considered that a method of conveniently imparting a sense of cooking to a dish is advantageous since it can (1) easily and conveniently provide a delicious dish, (2) reduce the cost of a dish by decreasing the amount of spice to be used, (3) maintain or promote health since the amount of salt to be used is reduced and the like.

Conventionally, a method capable of imparting a cooking aroma to a dish during cooking in a microwave oven, by adding a microwave-absorbing and heat-generating component, an aroma developing component and a temperature adjusting component, has been reported for a problem of imparting a cooking aroma of a dish cooked properly according to given steps to a dish obtained by easy cooking (patent document 1). However, since this method requires cooking in a special container, its versatility is problematically low. In addition, the aroma of a properly-cooked dish was analyzed and its components are listed in a report (non-patent document 1); however, there is no report teaching that a sense of cooking can be imparted by a combination of particular substances.

As a salty taste enhancing composition, a salty taste enhancer composed of a flavor component containing a Maillard reaction resultant product and a sulfur containing compound, and plant-derived solid content containing sterol or sterol fatty acid ester (patent document 2) has been reported; however, it has a problem that a pre-treatment such as special extraction and the like is necessary, and the like. In addition, a compound specifically acting on a salty taste receptor (patent document 3) and the like have also been reported.

On the other hand, as a spice enhancing composition using an aroma component, a pungent taste preparation has been reported (patent document 4); however, the preparation pursues only a pungent taste as the initial taste, and the effect is limited.

### [Document List]

### [Patent Documents]

patent document 1: JP-A-11-318378
patent document 2: JP-B-5293904
patent document 3: WO 2012/042621
patent document 4: JP-B-3115245

### [non-patent document]

non-patent document 1: E. Soto et al., Journal of Muscle Foods 21 (2010) pp.636-657.

### SUMMARY OF THE INVENTION

### Problems to be Solved by the Invention

The present invention aims to provide a flavoring composition capable of conveniently imparting a sense of cooking to a seasoning and a food.

### Means of Solving the Problems

The present inventors have conducted various studies in an attempt to solve the aforementioned problems and found that a sense of cooking can be imparted to a seasoning or food by adding component group A consisting of (A1) 2,6-dimethylpyrazine and (A2) 2-ethyl-3-methylpyrazine, and component group B consisting of at least one compound selected from (B1) allyl sulfide, (B2) allyl disulfide and (B3) allyl methyl disulfide to the seasoning or food, and conducted further studies and completed the present invention.

Accordingly, the present invention is as described below.

[1] A flavoring composition comprising component group A consisting of (A1) 2,6-dimethylpyrazine and (A2) 2-ethyl-3-methylpyrazine, and
   component group B consisting of at least one compound selected from (B1) allyl sulfide, (B2) allyl disulfide and (B3) allyl methyl disulfide.
[2] The composition of [1], wherein a weight ratio of (A1) and (A2) is 1:0.01 - 100, and a total weight ratio of component group A and component group B is 1:0.001 - 10000.
[3] The composition of [1] or [2], further comprising (C) furfuryl alcohol.
[4] The composition of [3], wherein a weight ratio of component group A and (C) is 1:0.01 - 1000.
[5] The composition of any one of [1] - [4], which is for imparting a sense of cooking.
[6] The composition of [5], wherein the imparting of a sense of cooking is imparting of a cooking aroma.
[7] The composition of [5], wherein the imparting of a sense of cooking is enhancing of a salty taste.
[8] The composition of [5], wherein the imparting of a sense of cooking is enhancing of a sense of spice.
[9] A method of producing a seasoning, comprising a step of adding component group A consisting of (A1) 2,6-dimethylpyrazine and (A2) 2-ethyl-3-methylpyrazine, and
   component group B consisting of at least one compound selected from (B1) allyl sulfide, (B2) allyl disulfide and (B3) allyl methyl disulfide.
[10] A method of producing a food, comprising a step of adding component group A consisting of (A1) 2,6-dimethylpyrazine and (A2) 2-ethyl-3-methylpyrazine, and
   component group B consisting of at least one compound selected from (B1) allyl sulfide, (B2) allyl disulfide and (B3) allyl methyl disulfide.
[11] The method of [9] or [10], wherein a weight ratio of (A1) and (A2) is 1:0.01 - 100, and a total weight ratio of component group A and component group B is 1:0.001 - 10000.
[12] The method of any one of [9] - [11], further comprising adding (C) furfuryl alcohol.
[13] The method of [12], wherein a weight ratio of component group A and (C) is 1:0.01 - 1000.
[14] The method of any one of [9] and [11] - [13], wherein the seasoning is imparted with a sense of cooking.
[15] The method of any one of [10] - [13], wherein the food is imparted with a sense of cooking.
[16] The method of [14] or [15], wherein the imparting of a sense of cooking is imparting of a cooking aroma.
[17] The method of [14] or [15], wherein the imparting of a sense of cooking is enhancing of a salty taste.
[18] The method of [14] or [15], wherein the imparting of a sense of cooking is enhancing of a sense of spice.
[19] A seasoning produced by the method of any one of [9], [11] - [14] and [16] - [18].
[20] A food produced by the method of any one of [10] - [13] and [15] - [18].
[21] A method of imparting a sense of cooking, comprising a step of adding component group A consisting of (A1) 2,6-dimethylpyrazine and (A2) 2-ethyl-3-methylpyrazine, and
   component group B consisting of at least one compound selected from (B1) allyl sulfide, (B2) allyl disulfide and (B3) allyl methyl disulfide.
[22] The method of [21], wherein a weight ratio of (A1) and (A2) is 1:0.01 - 100, and a total weight ratio of component group A and component group B is 1:0.001 - 10000.
[23] The method of [21] or [22], comprising further adding (C) furfuryl alcohol.
[24] The method of [23], wherein a weight ratio of component group A and (C) is 1:0.01 - 1000.
[25] The method of any one of [21] - [24], wherein the imparting of a sense of cooking is imparting of a cooking aroma.
[26] The method of any one of [21] - [24], wherein the imparting of a sense of cooking is enhancing of a salty taste.
[27] The method of any one of [21] - [24], wherein the imparting of a sense of cooking is enhancing of a sense of spice.

### [Effect of the Invention]

Utilizing the flavoring composition of the present invention, a sense of cooking can be imparted to a seasoning and a food, and therefore, a dish having a sufficient sense of cooking can be provided easily.

In addition, since the flavoring composition of the present invention can enhance a salty taste of a seasoning and a food, the amount of salt to be used can be reduced and the health can be maintained or promoted.

In addition, since the flavoring composition of the present invention can enhance a sense of spice of a seasoning and a food, the amount of spice to be used can be reduced and the cost of dish can be decreased.

Since the flavoring composition of the present invention is obtained by mixing predetermined compounds, those of ordinary skill in the art can produce same by a generally-utilized apparatus, and can easily control the production conditions thereof.

Furthermore, since the flavoring composition of the present invention contains predetermined compounds, and does not require adjustment of the composition depending on the kind of seasoning and food, it can be widely utilized for various seasonings and foods.

### [Brief Description of the Drawings]

Fig. 1 is a Table showing specific examples of an aroma component that can be contained in the composition of the present invention together with component C.
Fig. 2 is a Table showing meat-like aroma components added to the evaluation samples of Example 39 and Comparative Example 15.

### [Description of Embodiments]

The flavoring composition of the present invention (hereinafter sometimes to be simply referred to as "the composition of the present invention") is mainly characterized in that it contains component group A consisting of (A1) 2,6-dimethylpyrazine and (A2) 2-ethyl-3-methylpyrazine, and component group B consisting of at least one compound selected from (B1) allyl sulfide, (B2) allyl disulfide and (B3) allyl methyl disulfide.

2,6-Dimethylpyrazine (hereinafter sometimes to be simply referred to as "component A1" or "(A1)") used in the present invention is one kind of pyrazines, and has a CAS registry number of 108-50-9.

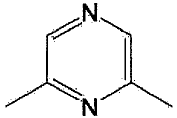

### 2,6-dimethylpyrazine (A1)

2-Ethyl-3-methylpyrazine (hereinafter sometimes to be simply referred to as "component A2" or "(A2)") used in the present invention is one kind of pyrazines and has a CAS registry number of 15707-23-0.

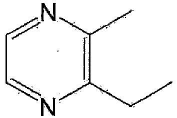

### 2-Ethyl-3-methylpyrazine (A2)

Allyl sulfide (hereinafter sometimes to be simply referred to as "component B1" or "(B1)") used in the present invention is one kind of sulfides and has a CAS registry number of 592-88-1.

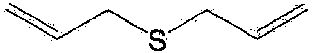

### allyl sulfide (B1)

Allyl disulfide (hereinafter sometimes to be simply referred to as "component B2" or "(B2)") used in the present invention is one kind of sulfides and has a CAS registry number of 2179-57-9.

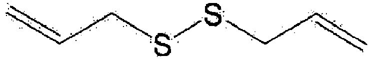

### allyl disulfide (B2)

Allyl methyl disulfide (hereinafter sometimes to be simply referred to as "component B3" or "(B3)") used in the present invention is one kind of sulfides and has a CAS registry number of 2179-58-0.

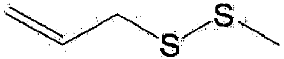

### allyl methyl disulfide (B3)

The composition of the present invention may further contain, in addition to the above-mentioned component group A and component group B, (C) furfuryl alcohol. Since the composition of the present invention contains (C) furfuryl alcohol, it can impart a stronger sense of cooking (e.g., cooking aroma, sense of spice) to a seasoning and a food.

Furfuryl alcohol (hereinafter sometimes to be simply referred to as "component C" or "(C)") used in the present invention is one kind of furans and has a CAS registry number of 98-00-0.

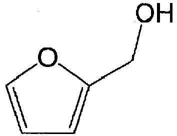

### furfuryl alcohol (C)

Each component used in the present invention may be, for example, a synthetic product or an extracted product and the like as long as it can be used for foods. A commercially available product can also be utilized, and is preferable since it is convenient. Alternatively, each component per se may not be used, and a food material (e.g., reaction flavor etc.) containing a large amount of any one or more kinds of the components may be used instead.

Component group A of the present invention consists of (A1) and (A2).

The weight ratio of (A1) and (A2) (A1:A2) is preferably 1:0.01 - 100, more preferably 1:0.05 - 50, particularly preferably 1:0.1 - 10, to impart inartificial fullness to a sense of cooking of a cooked foodstuff and impart or enhance growth.

Component group B of the present invention consists of at least one compound of (B1), (B2) and (B3), preferable at least two compounds of (B1), (B2) and (B3), most preferably (B1), (B2) and (B3).

When component group B consists of (B1) and (B2), the weight ratio of (B1) and (B2) (B1:B2) is preferably 1:0.1 - 15, more preferably 1:0.1 - 10, particularly preferably 1:1 - 10, to naturally impart or enhance the initial strength of a sense of cooking of a cooked foodstuff.

When component group B consists of (B1) and (B3), the weight ratio of (B1) and (B3) (B1:B3) is preferably 1:0.01 - 10, more preferably 1:0.1 - 5, particularly preferably 1:1 - 5, to naturally impart or enhance the initial strength of a sense of cooking of a cooked foodstuff and carry same to middle and afterwards.

When component group B consists of (B2) and (B3), the weight ratio of (B2) and (B3) (B2:B3) is preferably 1:0.01 - 10, more preferably 1:0.1 - 5, particularly preferably 1:1 - 5, to naturally impart or enhance the initial thickness of a sense of cooking of a cooked foodstuff and carry same to middle and afterwards.

When component group B consists of (B1), (B2) and (B3), the weight ratio of (B1) and (B2) and (B3) (B1:B2:B3) is preferably 1:0.1 - 15:0.01 - 10, more preferably 1:0.1 - 10:0.1 - 5, particularly preferably 1:1 - 10:1 - 5, to naturally impart or enhance the initial thickness of a sense of cooking of a cooked foodstuff and carry same to middle and afterwards, and impart or enhance inartificial fullness and growth.

The total weight ratio of component group A and component group B (A:B) is preferably 1:0.001 - 10000, more preferably 1:0.001 - 2000, particularly preferably 1:0.001 - 1500.

Here, the "total weight ratio of component group A and component group B" means the ratio of the total weight of component group A and the total weight of component group B, the total weight of component group A is a total of the weight of (A1) and the weight of (A2). The total weight of component group B is, for example, the weight of (B1) when component group B consists only of (B1), and when component group B consists of (B1), (B2) and (B3), it is a total weight of the weight of (B1) and the weight of (B2) and the weight of (B3).

When the composition of the present invention contains component C, the weight ratio of component group A and (C) (A:C) is preferably 1:0.01 - 1000, more preferably 1:0.1 - 100, particularly preferably 1:1 - 10.

Here, the weight ratio of component group A and (C) means a ratio of the total weight of component group A and the weight of component C.

The composition of the present invention preferably has
a weight ratio of (A1) and (A2) of 1:0.01 - 100 (more preferably 1:0.05 - 50, particularly preferably 1:0.1 - 10), and
a total weight ratio of component group A and component group B of 1:0.001 - 10000 (more preferably 1:0.001 - 2000, particularly preferably 1:0.001 - 1500).

When the composition of the present invention contains component C, preferably,
the weight ratio of (A1) and (A2) is 1:0.01 - 100 (more preferably 1:0.05 - 50, particularly preferably 1:0.1 - 10),
the total weight ratio of component group A and component group B is 1:0.001 - 10000 (more preferably 1:0.001 - 2000, particularly preferably 1:0.001 - 1500), and
the weight ratio of component group A and (C) is 1:0.01 - 1000 (more preferably 1:0.1 - 100, particularly preferably 1:1 - 10).

The form of the composition of the present invention is not particularly limited and, for example, solid (including powder, granular and the like), liquid (including slurry and the like), gel, paste and the like can be mentioned.

While the flavoring composition of the present invention may be composed only of component groups A and B, it may further contain, in addition to component groups A and B, a base conventionally used in the field of flavoring.

When the composition of the present invention contains component C, while the composition may be composed only of component groups A and B and component C, it may further contain, in addition to component groups A and B and component C, a base conventionally used in the field of flavoring.

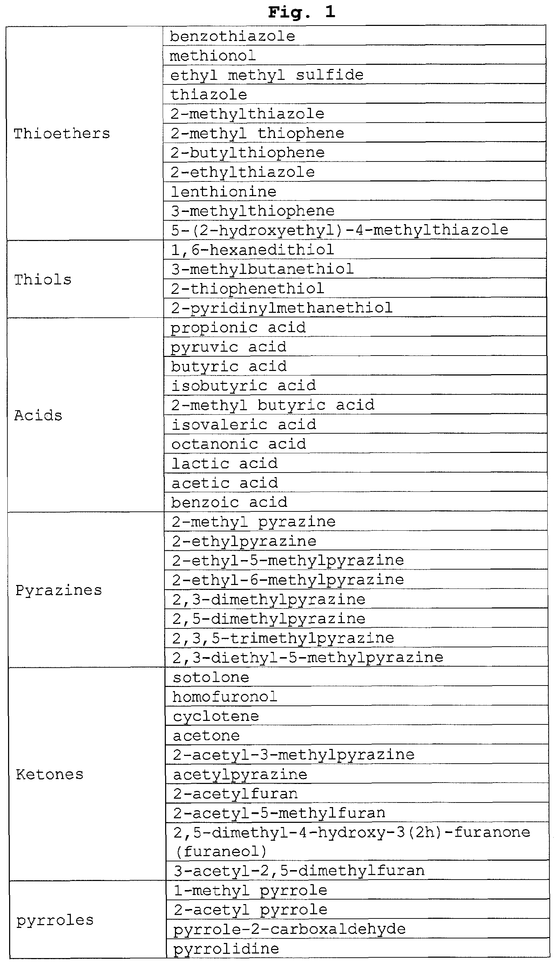

When the composition of the present invention contains component C, the composition may further contain an aroma component other than component groups A and B and component C (e.g., at least one kind of aroma components shown in Fig. 1 etc.). The composition of the present invention containing an aroma component shown in Fig. 1 and the like can impart a stronger sense of cooking (e.g., cooking aroma, sense of spice) to a seasoning and a food.

Examples of the base when the flavoring composition has a liquid form include water, ethanol, glycerol, propylene glycol, various animal or vegetable oils and the like.

Examples of the base when the flavoring composition has a solid form include starch, dextrin, cyclodextrin, various saccharides such as sucrose, glucose and the like, protein, peptide, amino acid, salt, solid fat, silicon dioxide, and mixtures thereof, yeast, various powdered extracts and the like.

The composition of the present invention may further contain, as long as the object of the present invention is not impaired, for example, excipient, pH adjuster, antioxidant, thickening stabilizer, sweetener (e.g., sugars etc.), acidulant, spice, colorant and the like.

The concentrations of the above-mentioned respective components in the composition of the present invention can be set to, for example, the following ranges.
(A1): not less than 1 weight ppm (preferably not less than 10 weight ppm, more preferably not less than 100 weight ppm) and not more than 99 wt% (preferably not more than 50 wt%, more preferably not more than 20 wt%)
(A2): not less than 1 weight ppm (preferably not less than 10 weight ppm, more preferably not less than 100 weight ppm) and not more than 99 wt% (preferably not more than 50 wt%, more preferably not more than 20 wt%)
(B1): not less than 0 (preferably not less than 1 weight ppm, more preferably not less than 10 weight ppm, particularly preferably not less than 100 weight ppm) and not more than 99 wt% (preferably not more than 50 wt%, more preferably not more than 20 wt%)
(B2): not less than 0 (preferably not less than 1 weight ppm, more preferably not less than 10 weight ppm, particularly preferably not less than 100 weight ppm) and not more than 99 wt% (preferably not more than 50 wt%, more preferably not more than 20 wt%)
(B3): not less than 0 (preferably not less than 1 weight ppm, more preferably not less than 10 weight ppm, particularly preferably not less than 100 weight ppm) and not more than 99 wt% (preferably not more than 50 wt%, more preferably not more than 20 wt%)
   When the flavoring composition of the present invention contains component C, the concentration of component C can be set to, for example, the following ranges.
(C): not less than 1 weight ppm (preferably not less than 10 weight ppm, more preferably not less than 100 weight ppm) and not more than 99 wt% (preferably not more than 50 wt%, more preferably not more than 20 wt%)

These concentrations are ratios of the weights of the respective components to the whole weight of the composition of the present invention.

The composition of the present invention can be produced by a method conventionally used in the field of flavoring. The composition of the present invention may be subjected to, for example, a condensation treatment, a drying treatment, a decolorization treatment and the like, singly or in combination.

The composition of the present invention can be used as a flavoring composition for imparting a sense of cooking.

In the present invention, the "sense of cooking" means aroma, flavor, taste (e.g., aroma, flavor, taste produced by cooking operation such as mild aroma of mature cheese, aroma of stewed meat and the like) felt in food after cooking (e.g., heating cooking such as sauteing, grilling, frying, steaming, stewing and the like, non-heating cooking such as maturing and the like). These are different from the aroma, flavor, taste felt from the foodstuff before cooking, and are irreversibly developed by chemical reactions in the foodstuff caused by physical operation of cooking. While the obtained sense of cooking varies depending on the kind of food, the cooking method thereof and the like, it generally contains at least one selected from cooking aroma, salty taste and sense of spice as a constituent element. Here, the "cooking aroma" means a unique aroma expressed by foods after cooking (e.g., heating cooking such as sauteing, grilling, frying, steaming, stewing and the like, non-heating cooking such as maturing and the like). For example, it refers to aroma produced by cooking operation such as aroma of stewed beef stew, fragrant aroma of fried food, mild aroma of mature cheese and the like. The "sense of spice" means a flavor such as unique aroma, pungent taste, sour taste and the like felt from the spice.

In the present invention, "imparting a sense of cooking" is a concept including not only newly imparting a sense of cooking to a seasoning or food having no sense of cooking, but also further imparting a sense of cooking to a seasoning or food having a sense of cooking, namely, enhancing a sense of cooking.

The "imparting a sense of cooking" in the present invention includes "imparting a cooking aroma", and a flavoring composition for imparting a sense of cooking may be a flavoring composition for imparting a cooking aroma in one embodiment.

In addition, the "imparting a sense of cooking" in the present invention includes "enhancing a salty taste", and a flavoring composition for imparting a sense of cooking may be a flavoring composition for enhancing a salty taste in one embodiment. In the present invention, "enhancing a salty taste" means a strong salty taste felt as if a salt concentration was increased.

In addition, the "imparting a sense of cooking" in the present invention includes "enhancing a sense of spice", and a flavoring composition for imparting a sense of cooking may be a flavoring composition for enhancing a sense of spice in one embodiment. In the present invention, "enhancing a sense of spice" means a strong sense of spice felt as if a spice concentration was increased.

The flavoring composition for imparting a sense of cooking includes, for example, a flavoring composition for imparting a cooking aroma and/or enhancing a salty taste; a flavoring composition for imparting a cooking aroma and/or enhancing a sense of spice; a flavoring composition for enhancing a salty taste and/or a sense of spice; a flavoring composition for at least one use selected from imparting a cooking aroma, enhancing a salty taste and enhancing a sense of spice, and the like.

The composition of the present invention can be utilized for a seasoning and a food. Therefore, the present invention provides a production method of seasoning or a food, including a step of adding the composition of the present invention.

Also, the present invention provides a method of imparting a sense of cooking, including a step of adding the composition of the present invention.

The method and conditions for adding the composition of the present invention to a seasoning or a food are not particularly limited, and can be appropriately set according to the dosage form of seasoning, the kind of food and the like.

In the method of adding the composition of the present invention to a seasoning or food, the component groups A and B constituting the composition of the present invention may be mixed and added to the seasoning or food, or each component group may be individually added to the seasoning or food. Therefore, the present invention provides a production method of a seasoning or food, including a step of adding the component group A and the component group B.

In addition, the present invention provides a method of imparting a sense of cooking, including a step of adding the component group A and the component group B.

When the flavoring composition of the present invention contains component C, in the method of adding the composition of the present invention to a seasoning or food, the component groups A and B and component C constituting the composition of the present invention may be mixed and added to the seasoning or food, or each component group and component C may be individually added to the seasoning or food. Therefore, the present invention provides a production method of a seasoning or food, including a step of adding the component group A, component group B and component C.

In addition, the present invention provides a method of imparting a sense of cooking, including a step of adding the component group A, component group B and component C.

When the component groups A and B are individually added, the weight ratio of (A1) and (A2) the weight ratio of (B1) and (B2) when the component group B consists of (B1) and (B2), the weight ratio of (B1) and (B3) when the component group B consists of (B1) and (B3), the weight ratio of (B2) and (B3) when the component group B consists of (B2) and (B3), the weight ratio of (B1) and (B2) and (B3) when the component group B consists of (B1), (B2) and (B3) and the total weight ratio of component group A and component group B are each the same as those for the composition of the present invention.

When component C is further added, the weight ratio of component group A and (C) is the same as that for the composition of the present invention.

When the component groups A and B are individually added, the order and interval of addition are not particularly limited and, for example, the order may be component group A and then component group B, or a reversed order thereof. Also, the component of each group may be added alternately or all components may be added simultaneously.

When the component C is further added, the order and interval of addition are not particularly limited.

The composition of the present invention, or component groups A and B (hereinafter these are to be also referred to as "the composition etc. of the present invention") can be added not only during production of a seasoning or food, but also after production of the seasoning or food. When the composition etc. of the present invention is added to a food, a seasoning added with the composition etc. of the present invention may be added during or after production of the food.

When the component groups A and B, and component C are individually added, component C can be added similarly with component groups A and B not only production seasoning or the food, but also after production of the seasoning or food. When the component groups A and B, and component C are added to a food, a seasoning added with the component groups A and B, and component C may be added during or after production of the food. In the following, "the composition etc. of the present invention" also encompasses addition of the component groups A and B, and component C.

While the seasoning to be added with the composition etc. of the present invention is not particularly limited, specific examples thereof include savory seasoning, flavor seasoning and menu-specific seasoning. A savory seasoning is a seasoning produced from a natural substance as a starting material and by methods such as extraction, decomposition, heating, fermentation and the like. Examples thereof include various livestock meat extracts such as chicken meat extract, beef meat extract, pork meat extract, sheep meat extract and the like; various bone extracts such as chicken bone extract, beef bone extract, pork bone extract and the like; various seafood extracts such as bonito extract, mackerel extract, croaker extract, scallop extract, crab extract, shrimp extract, dried sardine extract, dried adductor extract and the like; various dried fish extracts such as dried bonito extract, dried mackerel extract, dried bullet mackerel extract and the like; various vegetable extracts such as onion extract, Chinese cabbage extract, celery extract and the like; various seaweed extracts such as kelp extract and the like; various spice extracts such as garlic extract, chili extract, pepper extract, cacao extract and the like; yeast extracts; various protein hydrolysate; various fermentation seasonings such as soy sauce, fish sauce, shrimp sauce, miso and the like, and the like and mixtures thereof, processed product and the like. A flavor seasoning is a savory seasoning added with sugars, salt and the like, and used for imparting aroma, flavor and taste of flavor materials to food and drink. Examples of the flavor seasoning include various livestock meat flavor seasonings such as chicken flavor seasoning, beef flavor seasoning, pork flavor seasoning and the like; various seafood flavor seasonings such as bonito flavor seasoning, dried sardine flavor seasoning, dried adductor flavor seasoning, crustacean flavor seasoning and the like; various spicy vegetable flavor seasonings; kelp flavor seasoning and the like. In addition, basic seasonings such as salt, *umami* seasoning and the like can also be mentioned. A menu-specific seasoning is a seasoning suitable for cooking of particular menu (e.g., Chinese menu etc.) and the, for example, Chinese blended seasoning, blended seasoning, versatile paste seasoning, seasoning mix for mixed rice, seasoning mix for fried rice, spice mix and the like can be mentioned.

A seasoning to which the composition etc. of the present invention is added preferably contains a salt. While the salt concentration thereof is not particularly limited, it is preferably 0.1 wt% - 80 wt%, more preferably 1 wt% - 70 wt%, further preferably 5 wt% - 60 wt%.

A seasoning to which the composition etc. of the present invention is added preferably contains a spice. Specific examples of the spice include, but are not limited to, nutmeg, mace, garlic, laurel, thyme, black pepper, white pepper, basil, ginger, turmeric, fennel, caraway, chili pepper, cinnamon, marjoram, rosemary, cumin, celery, coriander, onion and the like. While the spice concentration of a food to which the composition of the present invention is added is not particularly limited, it is preferably 0.001 wt% - 20 wt%, more preferably 0.01 wt% - 10 wt%, particularly preferably 0.1 wt% - 1 wt%.

When the composition etc. of the present invention is added to a seasoning, the concentration of each component in the seasoning can be appropriately set according to the kind of the seasoning.

For example, when the composition etc. of the present invention is added to a savory seasoning or flavor seasoning, the concentration of each component in the savory seasoning or flavor seasoning is preferably within the following range.
(A1): not less than 1 weight ppm (more preferably not less than 10 weight ppm, particularly preferably not less than 100 weight ppm) and not more than 10 wt% (more preferably not more than 8 wt%, particularly preferably not more than 6 wt%)
(A2): not less than 1 weight ppm (more preferably not less than 10 weight ppm, particularly preferably not less than 100 weight ppm) and not more than 10 wt% (more preferably not more than 8 wt%, particularly preferably not more than 6 wt%)
(B1): not less than 0 (more preferably not less than 1 weight ppm, further preferably not less than 10 weight ppm, particularly preferably not less than 50 weight ppm) and not more than 3 wt% (more preferably not more than 2.5 wt%, particularly preferably not more than 2.2 wt%)
(B2): not less than 0 (more preferably not less than 0.1 weight ppm, further preferably not less than 100 weight ppm, particularly preferably not less than 300 weight ppm) and not more than 11 wt% (more preferably not more than 10.7 wt%, particularly preferably not more than 10.5 wt%)
(B3): not less than 0 (more preferably not less than 1 weight ppm, further preferably not less than 10 weight ppm, particularly preferably not less than 50 weight ppm) and not more than 4 wt% (more preferably not more than 3.6 wt%, particularly preferably not more than 3.5 wt%)
   When the flavoring composition of the present invention contains component C, or component groups A and B, and component C are individually added, the concentration of component C in the savory seasoning or flavor seasoning is, for example, preferably within the following range.
(C): not less than 1 weight ppm (more preferably not less than 10 weight ppm, particularly preferably not less than 100 weight ppm) and not more than 10 wt% (more preferably not more than 8 wt%, particularly preferably not more than 6 wt%)

These concentrations are the ratios of the weight of each component to the whole weight of the savory seasoning or flavor seasoning added with the composition etc. of the present invention.

When the composition etc. of the present invention is added to, for example, a menu-specific seasoning, the concentration of each component in the menu-specific seasoning is preferably within the following range.
(A1): not less than 0.01 weight ppm (more preferably not less than 0.1 weight ppm, particularly preferably not less than 1 weight ppm) and not more than 1000 weight ppm (more preferably not more than 500 weight ppm, particularly preferably not more than 400 weight ppm)
(A2): not less than 0.01 weight ppm (more preferably not less than 0.1 weight ppm, particularly preferably not less than 1 weight ppm) and not more than 1000 weight ppm (more preferably not more than 500 weight ppm, particularly preferably not more than 400 weight ppm)
(B1): not less than 0 (more preferably not less than 0.01 weight ppm, further preferably not less than 0.1 weight ppm, particularly preferably not less than 0.5 weight ppm) and not more than 1000 weight ppm (more preferably not more than 800 weight ppm, particularly preferably not more than 700 weight ppm)
(B2): not less than 0 (more preferably not less than 0.1 weight ppm, further preferably not less than 1 weight ppm, particularly preferably not less than 3 weight ppm) and not more than 5000 weight ppm (more preferably not more than 4000 weight ppm, particularly preferably not more than 3500 weight ppm)
(B3): not less than 0 (more preferably not less than 0.01 weight ppm, further preferably not less than 0.1 weight ppm, particularly preferably not less than 0.5 weight ppm) and not more than 1500 weight ppm (more preferably not more than 1200 weight ppm, particularly preferably not more than 1100 weight ppm)
   When the flavoring composition of the present invention contains component C, or component groups A and B, and component C are individually added, the concentration of component C in the menu-specific seasoning is, for example, preferably within the following range.
(C): not less than 0.01 weight ppm (more preferably not less than 0.1 weight ppm, particularly preferably not less than 1 weight ppm) and not more than 10000 weight ppm (more preferably not more than 7000 weight ppm, particularly preferably not more than 5000 weight ppm)

These concentrations are the ratios of the weight of each component to the whole weight of the menu-specific seasoning added with the composition etc. of the present invention

While a menu-specific seasoning is generally utilized for obtaining a particular menu by convenient cooking, the thus-obtained food tends to show an insufficient sense of cooking as compared to a food obtained by properly cooking according to given steps and using predetermined foodstuff. Therefore, the composition etc. of the present invention can be preferably used for a menu-specific seasoning and a food obtained by convenient cooking using the seasoning.

While the food to be added with the composition etc. of the present invention is not particularly limited as long as a sense of cooking is desired to be imparted to, for example, sauteed foods such as sauteed vegetables, fried rice, fried noodles, twice cooked pork, *mapo doufu,* pepper steak, sauteed shrimp with chili sauce, sauteed meats and vegetables, Indonesian fried rice, grilled rice noodles, scrambled egg, sweet-savory sauteed burdock root, curry roux, sauteed meats and the like; steamed foods such as steamed vegetable and the like; grilled foods such as grilled fish, grilled chicken, steak, grilled meat, sukiyaki, hamburger steak, grilled vegetable, grilled rice ball, rice cracker, various baked confectionery, pizza dough, bread and the like; various fried foods such as deep-fried food, fry, french-fried food, tempura and the like, and batter and breadcrumbs therefor; dressing (e.g., Japanese-style dressing, creamy dressing, Caesar dressing, French dressing, tartar sauce, mayonnaise etc.); sauce (e.g., steak sauce, sauce for grilled food with ginger jam, pizza sauce, caramel sauce, sauce for rice dumplings in a sweet soy glaze, sauce for grilled meats, demi-glace sauce etc.); consomme soup, potage soup, cream soup, minestrone soup and the like soup; drinks; and these processed product (e.g., food and drink for microwave oven cooking, instant food, frozen food, dried food etc.) and the like can be mentioned.

In the present invention, the "food" is a concept widely encompassing orally ingestable ones and also includes drinks and the like.

The food to be added with the composition etc. of the present invention preferably contains a salt. While the salt concentration thereof is not particularly limited, it is preferably 0.01 wt% - 10 wt%, more preferably 0.08 wt% - 8 wt%, particularly preferably 0.2 wt% - 5 wt%. The food to be added with the composition etc. of the present invention is preferably a food having a reduced salt concentration (specifically, a food having a salt concentration of not more than 8 wt%) from the aspect of sodium restriction.

The food to be added with the composition etc. of the present invention preferably contains a spice. Specific examples of the spice include those exemplified as the spice contained in the seasoning to be added to the composition of the present invention. While the spice concentration of the food to be added with the composition etc. of the present invention is not particularly limited, it is preferably 0.001 wt% - 20 wt%, more preferably 0.01 wt% - 10 wt%, particularly preferably 0.1 wt% - 1 wt%.

When the composition etc. of the present invention is added to a food, the concentration of each component in the food can be appropriately set according to the kind of the seasoning.

For example, when the composition etc. of the present invention is added to sauteed food, steamed food, grilled food, fried food, stewed food, soup or drink and the like, the concentration of each component in these foods is preferably within the following range.
(A1): not less than 0.01 weight ppm (more preferably not less than 0.05 weight ppm, particularly preferably not less than 0.08 weight ppm) and not more than 30 weight ppm (more preferably not more than 20 weight ppm, particularly preferably not more than 15 weight ppm)
(A2): not less than 0.01 weight ppm (more preferably not less than 0.05 weight ppm, particularly preferably not less than 0.08 weight ppm) and not more than 30 weight ppm (more preferably not more than 20 weight ppm, particularly preferably not more than 15 weight ppm)
(B1): not less than 0 (more preferably not less than 0.001 weight ppm, further preferably not less than 0.005 weight ppm, particularly preferably not less than 0.01 weight ppm) and not more than 80 weight ppm (more preferably not more than 60 weight ppm, particularly preferably not more than 50 weight ppm)
(B2): not less than 0 (more preferably not less than 0.01 weight ppm, further preferably not less than 0.05 weight ppm, particularly preferably not less than 0.08 weight ppm) and not more than 300 weight ppm (more preferably not more than 250 weight ppm, particularly preferably not more than 230 weight ppm)
(B3): not less than 0 (more preferably not less than 0.001 weight ppm, further preferably not less than 0.005 weight ppm, particularly preferably not less than 0.01 weight ppm) and not more than 100 weight ppm (more preferably not more than 80 weight ppm, particularly preferably not more than 75 weight ppm)
   When the flavoring composition of the present invention contains component C, or component groups A and B, and component C are individually added, the concentration of component C in the foods such as sauteed food, steamed food, grilled food, fried food, stewed food, soup or drink and the like is, for example, preferably within the following range.
(C): not less than 0.01 weight ppm (more preferably not less than 0.05 weight ppm, particularly preferably not less than 0.08 weight ppm) and not more than 1000 weight ppm (more preferably not more than 800 weight ppm, particularly preferably not more than 500 weight ppm)

These concentrations are the ratios of the weight of each component to the whole weight of the food added with the composition etc. of the present invention. These concentrations are preferably those at the time of eating and drinking of food.

For example, when the composition etc. of the present invention is added to a dressing, a sauce and the like, the concentration of each component in these foods is preferably within the following range.
(A1): not less than 0.1 weight ppm (more preferably not less than 0.5 weight ppm, particularly preferably not less than 1 weight ppm) and not more than 300 weight ppm (more preferably not more than 250 weight ppm, particularly preferably not more than 200 weight ppm)
(A2): not less than 0.1 weight ppm (more preferably not less than 0.5 weight ppm, particularly preferably not less than 1 weight ppm) and not more than 300 weight ppm (more preferably not more than 250 weight ppm, particularly preferably not more than 200 weight ppm)
(B1): not less than 0 (more preferably not less than 0.01 weight ppm, further preferably not less than 0.05 weight ppm, particularly preferably not less than 0.1 weight ppm) and not more than 800 weight ppm (more preferably not more than 700 weight ppm, particularly preferably not more than 650 weight ppm)
(B2): not less than 0 (more preferably not less than 0.1 weight ppm, further preferably not less than 0.5 weight ppm, particularly preferably not less than 1 weight ppm) and not more than 3300 weight ppm (more preferably not more than 3200 weight ppm, particularly preferably not more than 3150 weight ppm)
(B3): not less than 0 (more preferably not less than 0.01 weight ppm, further preferably not less than 0.05 weight ppm, particularly preferably not less than 0.1 weight ppm) and not more than 1200 weight ppm (more preferably not more than 1100 weight ppm, particularly preferably not more than 1050 weight ppm)
   When the flavoring composition of the present invention contains component C, or component groups A and B, and component C are individually added, the concentration of component C in the foods such as dressing or sauce and the like is, for example, preferably within the following range.
(C): not less than 0.1 weight ppm (more preferably not less than 0.5 weight ppm, particularly preferably not less than 1 weight ppm) and not more than 3000 weight ppm (more preferably not more than 2500 weight ppm, particularly preferably not more than 2000 weight ppm)

These concentrations are the ratios of the weight of each component to the whole weight of the food added with the composition etc. of the present invention. These concentrations are preferably those at the time of eating and drinking of food.

By the production method of a seasoning or food including a step of adding the composition etc. of the present invention, a seasoning or food sufficiently having a sense of cooking (e.g., cooking aroma, salty taste and sense of spice etc.) can be obtained.

By adding a seasoning containing the composition etc. of the present invention to a food, a sense of cooking (e.g., cooking aroma, salty taste, sense of spice etc.) can be imparted to the food.

In one embodiment, a method of imparting a sense of cooking, including a step of adding the composition etc. of the present invention may be, for example, a method of imparting a cooking aroma; a method of enhancing a salty taste; a method of enhancing a sense of spice and the like.

A method of imparting a sense of cooking, including a step of adding the composition etc. of the present invention may be, for example, a method of imparting a cooking aroma and/or a method of enhancing a salty taste; a method of imparting a cooking aroma and/or a method of enhancing a sense of spice; a method of enhancing a salty taste and/or a sense of spice; a method of imparting a cooking aroma and/or a method of enhancing a salty taste and/or a sense of spice and the like.

The present invention is explained in more detail in the following by referring to Examples, which are not to be construed as limitative. In the present specification, "ppm" means "weight ppm" unless otherwise specified.

### [Examples]

### 1. Preparation of addition solution

Each compound shown in the following Table 1 is weighed off by 5 g, dissolved in edible fats and oils (product name: AJINOMOTO Sara-Sara Canola Oil manufactured by J-Oil Mills) (95 g) and a 5 wt% solution of each compound (addition solution) was prepared.

**Table 1**

| component group | component | compound | sold by product No. |
|---|---|---|---|
| A | A1 | 2,6-dimethylpyrazine | Sigma-Aldrich W327301 |
| | A2 | 2-ethyl-3-methylpyrazine | Sigma-Aldrich W315508 |
| B | B1 | allyl sulfide | Sigma-Aldrich W204218 |
| | B2 | allyl disulfide | Sigma-Aldrich W202800 |
| | B3 | allyl methyl disulfide | Tokyo Chemical Industry Co., Ltd. A1939 |

In addition, component C: furfuryl alcohol (sold by: Sigma-Aldrich, product No.: W249106) (5 g) was weighed off, dissolved in edible fats and oils (product name: AJINOMOTO Sara-Sara Canola Oil, manufactured by J-Oil Mills) (95 g), and a 5 wt% solution (addition solution) of component C was prepared.

### 2. Evaluation of cooking aroma-imparting effect

A given amount of the addition solution of each component prepared in the above-mentioned 1. was added to a commercially available menu-specific seasoning (product name: Koumi Paste, manufactured by Ajinomoto Co., Inc.), and the mixture was sufficiently mixed to prepare a test seasoning (6 g). Cabbage (180 g) and one tablespoon (15 ml) of edible fats and oils (product name: AJINOMOTO Sara-Sara Canola Oil, manufactured by J-Oil Mills) were added and mixed, and the obtained mixture was heated in a microwave oven (1000W, 1.5 min) to prepare steamed cabbage (200 g) as an evaluation sample (Examples 1 - 16, Comparative Examples 1 - 5). The amount of the addition solution to be added, the concentration of each component in the test seasoning and the concentration thereof in the evaluation sample are as shown in the following Tables 2-1 to Table 2-3 under "amount to be added (mg)", "concentration (ppm) in seasoning" and "concentration (ppm) in sample".

In addition, One tablespoon (15 ml) of edible fats and oils (product name: AJINOMOTO Sara-Sara Canola Oil, manufactured by J-Oil Mills) was heated in a pan on medium heat for 30 seconds, cabbage (180 g) was added and sauted in the pan until it turned to light brown to prepare sauteed cabbage, and seasoned with a commercially available menu-specific seasoning (product name: Koumi Paste, manufactured by Ajinomoto Co., Inc.) (6 g). This was used as a positive control having a sufficient cooking aroma.

The cooking aroma-imparting effect was evaluated by three professional panelists according to the following evaluation criteria. Evaluation of the positive control is "+++".

### [evaluation criteria]

-: no cooking aroma
±: cooking aroma is weak
+: cooking aroma is felt
++: cooking aroma is felt strongly
+++: cooking aroma is felt very strongly
++++: cooking aroma is felt extremely strongly

The results are shown in the following Table 2-1 - Table 2-3.

**[Table 2-1]**

| component | | | Comparative Example | | | | |
|---|---|---|---|---|---|---|---|
| | | | 1 | 2 | 3 | 4 | 5 |
| A | A1 | amount to be added (mg) | | 4 | | 4 | |
| | | concentration in seasoning (ppm) | | 33.3 | | 33.3 | |
| | | concentration in sample (ppm) | | 1 | | 1 | |
| | A2 | amount to be added (mg) | | 4 | | | 4 |
| | | concentration in seasoning (ppm) | | 33.3 | | | 33.3 |
| | | concentration in sample (ppm) | | 1 | | | 1 |
| | B1 | amount to be added (mg) | | | 8 | 8 | 8 |
| | | concentration in seasoning (ppm) | | | 66.7 | 66.7 | 66.7 |
| | | concentration in sample (ppm) | | | 2 | 2 | 2 |
| | B2 | amount to be added (mg) | | | 40 | 40 | 40 |
| B | | concentration in seasoning (ppm) | | | 333.3 | 333.3 | 333.3 |
| | | concentration in sample (ppm) | | | 10 | 10 | 10 |
| | B3 | amount to be added (mg) | | | 12 | 12 | 12 |
| | | concentration in seasoning (ppm) | | | 100 | 100 | 100 |
| | | concentration in sample (ppm) | | | 3 | 3 | 3 |
| evaluation of cooking aroma-imparting effect (n=3) | | | - | - | - | - | - |

**[Table 2-2]**

| component | | | Example | | | | | | | | |
|---|---|---|---|---|---|---|---|---|---|---|---|
| | | | 1 | 2 | 3 | 4 | 5 | 6 | 7 | 8 | 9 |
| A | A1 | amount to be added (mg) | 4 | 4 | 4 | 4 | 4 | 4 | 4 | 4 | 4 |
| | | concentration in seasoning (ppm) | 33.3 | 33.3 | 33.3 | 33.3 | 33.3 | 33.3 | 33.3 | 33.3 | 33.3 |
| | | concentration in sample (ppm) | 1 | 1 | 1 | 1 | 1 | 1 | 1 | 1 | 1 |
| | A2 | amount to be added (mg) | 4 | 4 | 4 | 4 | 4 | 4 | 4 | 4 | 4 |
| | | concentration in seasoning (ppm) | 33.3 | 33.3 | 33.3 | 33.3 | 33.3 | 33.3 | 33.3 | 33.3 | 33.3 |
| | | concentration in sample (ppm) | 1 | 1 | 1 | 1 | 1 | 1 | 1 | 1 | 1 |
| | B1 | amount to be added (mg) | 0.08 | 8 | 80 | | | | | | |
| | | concentration in seasoning (ppm) | 0.67 | 66.7 | 666.7 | | | | | | |
| | | concentration in sample (ppm) | 0.02 | 2 | 20 | | | | | | |
| | B2 | amount to be added (mg) | | | | 0.4 | 40 | 400 | | | |
| B | | concentration in seasoning (ppm) | | | | 3.33 | 333.3 | 3333.3 | | | |
| | | concentration in sample (ppm) | | | | 0.1 | 10 | 100 | | | |
| | B3 | amount to be added (mg) | | | | | | | 1.2 | 12 | 120 |
| | | concentration in seasoning (ppm) | | | | | | | 10 | 100 | 1000 |
| | | concentration in sample (ppm) | | | | | | | 0.3 | 3 | 30 |
| weight ratio of (A1) and (A2) (A1:A2) | | | 1:1 | 1:1 | 1:1 | 1:1 | 1:1 | 1:1 | 1:1 | 1:1 | 1:1 |
| total weight ratio of component group A and component group B (A:B) | | | 1:0.01 | 1:1 | 1:10 | 1:0.05 | 1:5 | 1:50 | 1:0.15 | 1:1.5 | 1:15 |
| evaluation of cooking aroma-imparting effect (n=3) | | | + | +++ | ++ | + | ++++ | +++ | ++ | ++ | ++ |

**[Table 2-3]**

| component | | | Example | | | | | | |
|---|---|---|---|---|---|---|---|---|---|
| | | | 10 | 11 | 12 | 13 | 14 | 15 | 16 |
| A | A1 | amount to be added (mg) | 0.4 | 4 | 40 | 0.4 | 40 | 40 | 0.8 |
| | | concentration in seasoning (ppm) | 3.33 | 33.3 | 333 | 3.33 | 333 | 333 | 6.66 |
| | | concentration in sample (ppm) | 0.10 | 1.0 | 10 | 0.10 | 10 | 10 | 0.2 |
| | A2 | amount to be added (mg) | 0.4 | 4 | 40 | 40 | 0.4 | 40 | 0.8 |
| | | concentration in seasoning (ppm) | 3.33 | 33.3 | 333 | 333 | 3.33 | 333 | 6.66 |
| | | concentration in sample (ppm) | 0.10 | 1.0 | 10 | 10 | 0.10 | 10 | 0.2 |
| | B1 | amount to be added (mg) | 8 | 8 | 8 | 8 | 8 | | 80 |
| | | concentration in seasoning (ppm) | 66.6 | 66.6 | 66.6 | 66.6 | 66.6 | | 666 |
| | | concentration in sample (ppm) | 2.0 | 2.0 | 2.0 | 2.0 | 2.0 | | 20 |
| | B2 | amount to be added (mg) | 40 | 40 | 40 | 40 | 40 | | 400 |
| B | | concentration in seasoning (ppm) | 333 | 333 | 333 | 333 | 333 | | 3333 |
| | | concentration in sample (ppm) | 10 | 10 | 10 | 10 | 10 | | 100 |
| | B3 | amount to be added (mg) | 12 | 12 | 12 | 12 | 12 | 0.08 | 120 |
| | | concentration in seasoning (ppm) | 100 | 100 | 100 | 100 | 100 | 0.66 | 1000 |
| | | concentration in sample (ppm) | 3 | 3 | 3 | 3 | 3 | 0.024 | 30 |
| weight ratio of (A1) and (A2) (A1:A2) | | | 1:1 | 1:1 | 1:1 | 1:100 | 1:0.01 | 1:1 | 1:1 |
| total weight ratio of component group A and component group B (A:B) | | | 1:75 | 1:7.5 | 1:0.75 | 1:1.49 | 1:1.49 | 1:0.001 | 1:375 |
| evaluation of cooking aroma-imparting effect (n=3) | | | ++++ | ++ | + | ++ | ++ | ++ | ++ |

As is clear from Table 2-1 - Table 2-3, the samples (Examples 1 - 16) prepared by adding (A1) and (A2), and at least one selected from (B1), (B2) and (B3) showed a strong to extremely strong cooking aroma, and were confirmed to have a sufficiently-imparted cooking aroma.

On the other hand, the samples of Comparative Examples 1 - 5 did not show a cooking aroma, and a cooking aroma was not imparted.

### 3. Evaluation of salty taste-enhancing effect and sense of spice-enhancing effect

A given amount of the addition solution of each component prepared in the above-mentioned 1. was added to a commercially available menu-specific seasoning (product name: Nasi Goreng No Moto, manufactured by Indofood Sukses Makmur), and the mixture was sufficiently mixed to prepare a test seasoning (20 g). One tablespoon (15 ml) of edible fats and oils (product name: AJINOMOTO Sara-Sara Canola Oil, manufactured by J-Oil Mills) was heated in a pan on medium heat for 30 seconds, the test seasoning was added and sauted for 30 seconds, fried rice (200 g) was added and sauted to prepare Indonesian fried rice (220 g) as an evaluation sample (Examples 17 - 32, Comparative Examples 6 - 8). The amount of the addition solution to be added, the concentration of each component in the test seasoning and the concentration thereof in the evaluation sample are as shown in the following Tables 3-1 to Table 3-3 under "amount to be added (mg)", "concentration (ppm) in seasoning" and "concentration (ppm) in sample".

Indonesian fried rice was prepared in the same manner as above except that the addition solution of each component was not added to the menu-specific seasoning, and used as a control.

The salty taste-enhancing effect and sense of spice-enhancing effect were evaluated by three professional panelists according to the following evaluation criteria.

### [evaluation criteria]

-: weaker than control
±: equal to control
+: somewhat stronger than control
++: clearly stronger than control
+++: very stronger than control
++++: extremely stronger than control

The results are shown in the following Table 3-1 - Table 3-3.

**[Table 3-1]**

| component | | | Comparative Example | | |
|---|---|---|---|---|---|
| | | | 6 | 7 | 8 |
| A | A1 | amount to be added (mg) | 5.6 | | |
| | | concentration in seasoning (ppm) | 14 | | |
| | | concentration in sample (ppm) | 1.27 | | |
| | A2 | amount to be added (mg) | 5.6 | | |
| | | concentration in seasoning (ppm) | 14 | | |
| | | concentration in sample (ppm) | 1.27 | | |
| | B1 | amount to be added (mg) | | 20 | |
| | | concentration in seasoning (ppm) | | 50 | |
| | | concentration in sample (ppm) | | 4.5 | |
| | B2 | amount to be added (mg) | | 100 | |
| B | | concentration in seasoning (ppm) | | 250 | |
| | | concentration in sample (ppm) | | 22.7 | |
| | B3 | amount to be added (mg) | | 32 | |
| | | concentration in seasoning (ppm) | | 80 | |
| | | concentration in sample (ppm) | | 7.2 | |
| evaluation of salty taste-enhancing effect (n=3) | | | ± | + | ± |
| evaluation of sense of spice-enhancing effect (n=3) | | | ± | + | ± |

**[Table 3-2]**

| component | | | Example | | | | | | | | |
|---|---|---|---|---|---|---|---|---|---|---|---|
| | | | 17 | 18 | 19 | 20 | 21 | 22 | 23 | 24 | 25 |
| A | A1 | amount to be added (mg) | 5.6 | 5.6 | 5.6 | 5.6 | 5.6 | 5.6 | 5.6 | 5.6 | 5.6 |
| | | concentration in seasoning (ppm) | 14 | 14 | 14 | 14 | 14 | 14 | 14 | 14 | 14 |
| | | concentration in sample (ppm) | 1.273 | 1.273 | 1.273 | 1.273 | 1.273 | 1.273 | 1.273 | 1.273 | 1.273 |
| | A2 | amount to be added (mg) | 5.6 | 5.6 | 5.6 | 5.6 | 5.6 | 5.6 | 5.6 | 5.6 | 5.6 |
| | | concentration in seasoning (ppm) | 14 | 14 | 14 | 14 | 14 | 14 | 14 | 14 | 14 |
| | | concentration in sample (ppm) | 1.273 | 1.273 | 1.273 | 1.273 | 1.273 | 1.273 | 1.273 | 1.273 | 1.273 |
| | B1 | amount to be added (mg) | 2 | 20 | 200 | | | | | | |
| | | concentration in seasoning (ppm) | 5 | 50 | 500 | | | | | | |
| | | concentration in sample (ppm) | 0.455 | 4.545 | 45.45 | | | | | | |
| | B2 | amount to be added (mg) | | | | 10 | 100 | 1000 | | | |
| B | | concentration in seasoning (ppm) | | | | 25 | 250 | 2500 | | | |
| | | concentration in sample (ppm) | | | | 2.273 | 22.73 | 227.3 | | | |
| | B3 | amount to be added (mg) | | | | | | | 3.2 | 32 | 320 |
| | | concentration in seasoning (ppm) | | | | | | | 8 | 80 | 800 |
| | | concentration in sample (ppm) | | | | | | | 0.727 | 7.273 | 72.73 |
| weight ratio of (A1) and (A2) (A1:A2) | | | 1:1 | 1:1 | 1:1 | 1:1 | 1:1 | 1:1 | 1:1 | 1:1 | 1:1 |
| total weight ratio of component group A and component group B (A:B) | | | 1:0.179 | 1:1.79 | 1:17.9 | 1:0.893 | 1:8.93 | 1:89.3 | 1:0.286 | 1:2.86 | 1:28.6 |
| evaluation of salty taste-enhancing effect (n=3) | | | ++ | ++ | +++ | ++ | +++ | +++ | ++ | ++ | +++ |
| evaluation of sense of spice-enhancing effect (n=3) | | | ++ | ++ | ++ | +++ | ++ | +++ | ++ | ++ | ++ |

**[Table 3-3]**

| component | | | Example | | | | | | |
|---|---|---|---|---|---|---|---|---|---|
| | | | 26 | 27 | 28 | 29 | 30 | 31 | 32 |
| A | A1 | amount to be added (mg) | 0.56 | 5.6 | 28 | 0.56 | 56 | 56 | 0.56 |
| | | concentration in seasoning (ppm) | 1.4 | 14 | 70 | 1.4 | 140 | 140 | 1.4 |
| | | concentration in sample (ppm) | 0.127 | 1.273 | 6.364 | 0.127 | 12.73 | 12.73 | 0.127 |
| | A2 | amount to be added (mg) | 0.56 | 5.6 | 28 | 56 | 0.56 | 56 | 0.56 |
| | | concentration in seasoning (ppm) | 1.4 | 14 | 70 | 140 | 1.4 | 140 | 1.4 |
| | | concentration in sample (ppm) | 0.127 | 1.273 | 6.364 | 12.73 | 0.127 | 12.73 | 0.127 |
| | B1 | amount to be added (mg) | 20 | 20 | 20 | 20 | 20 | | 200 |
| | | concentration in seasoning (ppm) | 50 | 50 | 50 | 50 | 50 | | 500 |
| | | concentration in sample (ppm) | 4.545 | 4.545 | 4.545 | 4.545 | 4.545 | | 45.45 |
| | B2 | amount to be added (mg) | 100 | 100 | 100 | 100 | 100 | | 1000 |
| B | | concentration in seasoning (ppm) | 250 | 250 | 250 | 250 | 250 | | 2500 |
| | | concentration in sample (ppm) | 22.73 | 22.73 | 22.73 | 22.73 | 22.73 | | 227.3 |
| | B3 | amount to be added (mg) | 32 | 32 | 32 | 32 | 32 | 3.2 | 320 |
| | | concentration in seasoning (ppm) | 80 | 80 | 80 | 80 | 80 | 8 | 800 |
| | | concentration in sample (ppm) | 7.273 | 7.273 | 7.273 | 7.273 | 7.273 | 0.727 | 72.73 |
| weight ratio of (A1) and (A2) (A1:A2) | | | 1:1 | 1:1 | 1:1 | 1:100 | 1:0.01 | 1:1 | 1:1 |
| total weight ratio of component group A and component group B (A:B) | | | 1:136 | 1:13.6 | 1:2.71 | 1:2.69 | 1:2.69 | 1:0.029 | 1:1357 |
| evaluation of salty taste-enhancing effect (n=3) | | | +++ | ++ | ++ | +++ | ++ | +++ | +++ |
| evaluation of sense of spice-enhancing effect (n=3) | | | +++ | +++ | +++ | +++ | +++ | ++ | ++++ |

As is clear from Table 3-1 - Table 3-3, the samples (Examples 17 - 32) prepared by adding (A1) and (A2), and at least one selected from (B1), (B2) and (B3) showed clearly strong to extremely strong salty taste and sense of spice than in the control, and were confirmed to have sufficiently enhanced salty taste and sense of spice.

On the other hand, the samples of Comparative Examples 6 - 8 only showed salty taste and sense of spice equal to or somewhat stronger than those of the control, and the salty taste and sense of spice were not sufficiently enhanced.

### 4. Evaluation of sense of cooking-imparting effect when component C is added

One tablespoon (15 ml) of edible fats and oils (product name: AJINOMOTO olive oil, manufactured by J-Oil Mills ) was heated in a pan on medium heat for 30 seconds, carrot (90 g) cut in 1 cm dice, onion (100 g) cut in 1 cm dice and cabbage (110 g) cut in 3 cm dice were added and sauteed for 2 min, cut tomato (product name: Del Monte Kanjuku Cut Tomato, manufactured by Del Monte, 400 g), solid consomme (product name: Ajinomoto KK Consomme <solid type>, manufactured by Ajinomoto Co., Inc., 15.9 g) and water (600 g) were further added and stewed for 5 min. The ingredients were filtered off with a net to give a soup, a given amount of the addition solution of each component prepared in the above-mentioned 1. was added to the soup, and the soup was sufficiently mixed to prepare the minestrone soup (200 g) as an evaluation sample (Examples 33 - 38, Comparative Examples 9 - 14). The amount of the addition solution to be added and the concentration of each component in the evaluation sample are as shown in the following Tables 4-1 to Table 4-2 under "amount to be added (mg)" and "concentration (ppm) in sample".

The sense of cooking-imparting effect (specifically, cooking aroma-imparting effect and sense of spice-enhancing effect) were evaluated by three professional panelists according to the following evaluation criteria.

### [evaluation criteria]

-: no sense of cooking
+: sense of cooking is felt
++: strong sense of cooking is felt
+++: very strong sense of cooking is felt
++++: extremely strong sense of cooking is felt
+++++: strongest sense of cooking is felt

The results are shown in the following Table 4-1, Table 4-2.

**[Table 4-1]**

| component | | | Comparative Example | | | | Example | Comparative Example | |
|---|---|---|---|---|---|---|---|---|---|
| | | | 9 | 10 | 11 | 12 | 33 | 13 | 14 |
| A | A1 | amount to be added (mg) | | 0.4 | | | 0.4 | 0.4 | |
| | | concentration in sample (ppm) | | 0.1 | | | 0.1 | 0.1 | |
| | A2 | amount to be added (mg) | | 0.4 | | | 0.4 | 0.4 | |
| | | concentration in sample (ppm) | | 0.1 | | | 0.1 | 0.1 | |
| B | B3 | amount to be added (mg) | | | 1.2 | | 1.2 | | 1.2 |
| | | concentration in sample (ppm) | | | 0.3 | | 0.3 | | 0.3 |
| C | | amount to be added (mg) | | | | 4 | | 4 | 4 |
| | | concentration in sample (ppm) | | | | 1 | | 1 | 1 |
| weight ratio of (A1) and (A2) (A1:A2) | | | | 1:1 | | | 1:1 | 1:1 | |
| total weight ratio of component group A and component group B (A:B) | | | | | | | 1:1.5 | | |
| weight ratio of component group A and (C) (A:C) | | | | | | | | 1:5 | |
| evaluation of sense of cooking-imparting effect (n=3) | | | - | - | - | - | ++ | - | - |

**[Table 4-2]**

| component | | | Example | | | | |
|---|---|---|---|---|---|---|---|
| | | | 34 | 35 | 36 | 37 | 38 |
| A | A1 | amount to be added (mg) | 4 | 0.4 | 0.4 | 0.4 | 0.4 |
| | | concentration in sample (ppm) | 1 | 0.1 | 0.1 | 0.1 | 0.1 |
| | A2 | amount to be added (mg) | 4 | 0.4 | 0.4 | 0.4 | 0.4 |
| | | concentration in sample (ppm) | 1 | 0.1 | 0.1 | 0.1 | 0.1 |
| B | B3 | amount to be added (mg) | 1.2 | 1.2 | 1.2 | 1.2 | 1.2 |
| | | concentration in sample (ppm) | 0.3 | 0.3 | 0.3 | 0.3 | 0.3 |
| C | | amount to be added (mg) | 0.4 | 0.4 | 4 | 40 | 400 |
| | | concentration in sample (ppm) | 0.1 | 0.1 | 1 | 10 | 100 |
| weight ratio of (A1) and (A2) (A1:A2) | | | 1:1 | 1:1 | 1:1 | 1:1 | 1:1 |
| total weight ratio of component group A and component group B (A:B) | | | 1:0.15 | 1:1.5 | 1:1.5 | 1:1.5 | 1:1.5 |
| weight ratio of component group A and (C) (A:C) | | | 1:0.05 | 1:0.5 | 1:5 | 1:50 | 1:500 |
| evaluation of sense of cooking-imparting effect (n=3) | | | +++ | ++++ | +++++ | ++++ | +++ |

As is clear from Table 4-1 and Table 4-2, it was confirmed that the sample (Example 33) prepared by adding (A1) and (A2), and (B3) showed a strong sense of cooking, and the samples (Examples 34 - 38) prepared by further adding (C) showed a very strong sense of cooking to the strongest sense of cooking.

On the other hand, the samples of Comparative Examples 9 - 14 did not show a sense of cooking.

### 5. Evaluation of sense of cooking-imparting effect when component C and meat-like aroma component are added

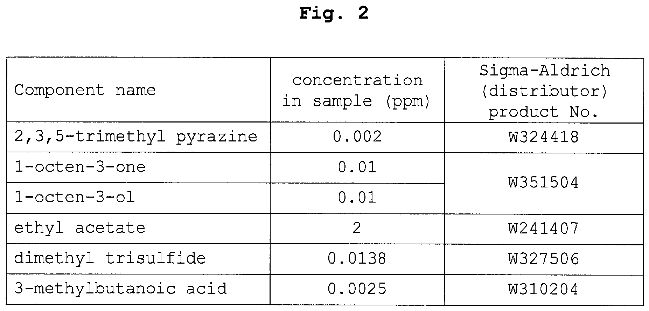

One tablespoon (15 ml) of edible fats and oils (product name: AJINOMOTO olive oil, manufactured by J-Oil Mills ) was heated in a pan on medium heat for 30 seconds, carrot (90 g) cut in 1 cm dice, onion (100 g) cut in 1 cm dice and cabbage (110 g) cut in 3 cm dice were added and sauteed for 2 min, cut tomato (product name: Del Monte Kanjuku Cut Tomato, manufactured by Del Monte, 400 g), solid consomme (product name: Ajinomoto KK Consomme <solid type>, manufactured by Ajinomoto Co., Inc., 15.9 g) and water (600 g) were further added and stewed for 5 min. The ingredients were filtered off with a net to give a soup, a given amount of the addition solution of each component prepared in the above-mentioned 1. was added to the soup, each aroma component described in Fig. 2 was further added, and the soup was sufficiently mixed to prepare the minestrone soup (200 g) as an evaluation sample (Example 39, Comparative Example 15). The amount of the addition solution to be added and the concentration of each component in the evaluation sample are as shown in the following Table 5 under "amount to be added (mg)" and "concentration (ppm) in sample". The concentrations of the meat-like aroma components in the evaluation sample was as shown in Fig. 2.

The sense of cooking-imparting effect (specifically, cooking aroma-imparting effect and sense of spice-enhancing effect) were evaluated by four professional panelists according to the following evaluation criteria.

### [evaluation criteria]

-: no sense of cooking
+: sense of cooking is felt
++: strong sense of cooking is felt
+++: very strong sense of cooking is felt
++++: extremely strong sense of cooking is felt
+++++: strongest sense of cooking is felt

The results are shown in the following Table 5.

**[Table 5]**

| component | | | Comparative Example | Example |
|---|---|---|---|---|
| | | | 15 | 39 |
| A | A1 | amount to be added (mg) | | 0.4 |
| | | concentration in sample (ppm) | | 0.1 |
| | A2 | amount to be added (mg) | | 0.4 |
| | | concentration in sample (ppm) | | 0.1 |
| B | B3 | amount to be added (mg) | | 1.2 |
| | | concentration in sample (ppm) | | 0.3 |
| C | | amount to be added (mg) | | 4 |
| | | concentration in sample (ppm) | | 1 |
| weight ratio of (A1) and (A2) (A1:A2) | | | | 1:1 |
| total weight ratio of component group A and component group B (A:B) | | | | 1:1.5 |
| weight ratio of component group A and (C) (A:C) | | | | 1:5 |
| evaluation of sense of cooking-imparting effect (n=4) | | | - | +++++ |

As is clear from Table 5, the sample (Example 39) prepared by adding (A1), (A2), (B3), (C) and the aroma components described in Fig. 2 was confirmed to most strongly show a sense of cooking.

On the other hand, the sample of Comparative Example 15 did not show a sense of cooking.

### [Industrial Applicability]

Utilizing the flavoring composition of the present invention, a sense of cooking can be imparted to a seasoning and a food, and therefore, a dish having a sufficient sense of cooking can be provided easily.

In addition, since the flavoring composition of the present invention can enhance a salty taste of a seasoning and a food, the amount of salt to be used can be reduced and the health can be maintained or promoted.

In addition, since the flavoring composition of the present invention can enhance a sense of spice of a seasoning and a food, the amount of spice to be used can be reduced and the cost of dish can be decreased.

Since the flavoring composition of the present invention is obtained by mixing predetermined compounds, those of ordinary skill in the art can produce same by a generally-utilized apparatus, and can easily control the production conditions thereof.

Furthermore, since the flavoring composition of the present invention contains predetermined compounds, and does not require adjustment of the composition depending on the kind of seasoning and food, it can be widely utilized for various seasonings and foods.

This application is based on a patent application No. 2014-070654 filed in Japan (filing date: March 29, 2014), the contents of which are incorporated in full herein.

## Claims

1. A flavoring composition comprising component group A consisting of (A1) 2,6-dimethylpyrazine and (A2) 2-ethyl-3-methylpyrazine, and
component group B consisting of at least one compound selected from (B1) allyl sulfide, (B2) allyl disulfide and (B3) allyl methyl disulfide.

2. The composition according to claim 1, wherein a weight ratio of (A1) and (A2) is 1:0.01 - 100, and a total weight ratio of component group A and component group B is 1:0.001 - 10000.

3. The composition according to claim 1 or 2, further comprising (C) furfuryl alcohol.

4. The composition according to claim 3, wherein a weight ratio of component group A and (C) is 1:0.01 - 1000.

5. The composition according to any one of claims 1 to 4, which is for imparting a sense of cooking.

6. A method of producing a seasoning, comprising a step of adding component group A consisting of (A1) 2,6-dimethylpyrazine and (A2) 2-ethyl-3-methylpyrazine, and
component group B consisting of at least one compound selected from (B1) allyl sulfide, (B2) allyl disulfide and (B3) allyl methyl disulfide.

7. A method of producing a food, comprising a step of adding component group A consisting of (A1) 2,6-dimethylpyrazine and (A2) 2-ethyl-3-methylpyrazine, and
component group B consisting of at least one compound selected from (B1) allyl sulfide, (B2) allyl disulfide and (B3) allyl methyl disulfide.

8. The method according to claim 6 or 7, wherein a weight ratio of (A1) and (A2) is 1:0.01 - 100, and a total weight ratio of component group A and component group B is 1:0.001 - 10000.

9. The method according to any one of claims 6 to 8, further comprising adding (C) furfuryl alcohol.

10. The method according to claim 9, wherein a weight ratio of component group A and (C) is 1:0.01 - 1000.

11. The method according to any one of claims 6 and 8 to 10, wherein the seasoning is imparted with a sense of cooking.

12. The method according to any one of claims 7 to 10, wherein the food is imparted with a sense of cooking.

13. A seasoning produced by the method according to any one of claims 6 and 8 to 11.

14. A food produced by the method according to any one of claims 7 to 10 and 12.

15. A method of imparting a sense of cooking, comprising a step of adding component group A consisting of (A1) 2,6-dimethylpyrazine and (A2) 2-ethyl-3-methylpyrazine, and
component group B consisting of at least one compound selected from (B1) allyl sulfide, (B2) allyl disulfide and (B3) allyl methyl disulfide.

16. The method according to claim 15, wherein a weight ratio of (A1) and (A2) is 1:0.01 - 100, and a total weight ratio of component group A and component group B is 1:0.001 - 10000.

17. The method according to claim 15 or 16, comprising further adding (C) furfuryl alcohol.

18. The method according to claim 17, wherein a weight ratio of component group A and (C) is 1:0.01 - 1000.

19. The method according to any one of claims 15 to 18, wherein the imparting of a sense of cooking is imparting of a cooking aroma.

20. The method according to any one of claims 15 to 18, wherein the imparting of a sense of cooking is enhancing of a salty taste.

21. The method according to any one of claims 15 to 18, wherein the imparting of a sense of cooking is enhancing of a sense of spice.
